# EUROPEAN PATENT APPLICATION

(11) **EP 4 546 123 A1**
(43) Date of publication of application: **30.04.2025**
(21) Application number: 23275151.1
(22) Date of filing: 27.10.2023
(51) Int. Cl.: G06F 9/451, G06F 9/455

(54) **MULTI-FUCTION CONSOLE DISPLAY SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A multi-function console display system comprises a plurality of client computing devices (202). Each client computing device comprises a processor, a user interface and a display device. The system further comprises a server computing device (204) configured to operate a containerised architecture and is in communication with the plurality of client computing devices. The server computing device receives a display request from one of the plurality of client computing devices, and starts a container (212) to execute an application for generating the requested display. The server further streams data comprising a display generated by the application of the container to the client computing device for displaying on the display device of the client computing device.

## Description

### FIELD OF THE INVENTION

The present invention relates to a multi-function console display system for a vessel.

### BACKGROUND

Multi-function consoles (MFCs) are devices fitted in locations including vessels such as submarines that allow operators to interact with onboard and/or external systems, such as ones that provide vessel control or communications functions. Conventional MFCs are bulky due to being based on dated computing apparatus, such as older PCs and display devices. These MFCs are typically over 0.5 meters deep and therefore take up a significant amount of space in a confined area such as a submarine.

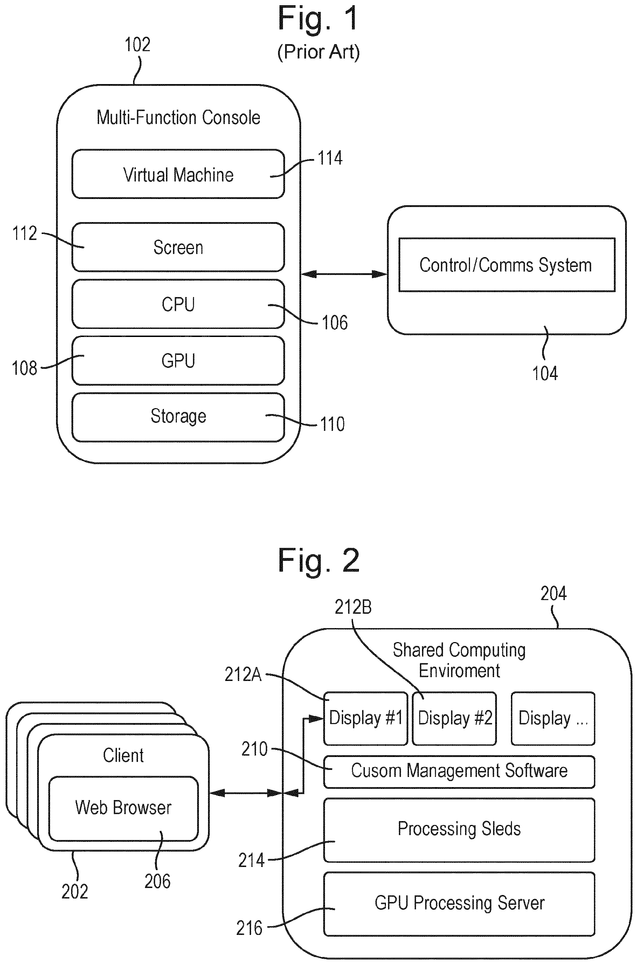

Figure 1 is a block diagram of a conventional MFC 102 in communication with a system 104 onboard a submarine. The MFC receives data from the system including processed control system data, such as contact tracks and sonar readings, as well as platform status data, such as server status. The MFC individually processes the data using a virtual machine 114 in order to display the content on its screen 112. Therefore, conventional MFCs require considerable computing power to support the applications, such as the hypervisor, that run on them. Conventional MFCs must include several relatively expensive and powerful components such as their own CPU 106 and GPU 108 in addition to storage 110.

### SUMMARY

Embodiments of the present invention can address one or more of the above technical problems. Embodiments can provide a highly-available display system that can be integrated into any suitable system and which leverages technologies developed for cloud-based rendering. By offloading rendering load onto a central processing infrastructure (which can include GPUs), embodiments can minimise the processing power needed for MFCs as well as increasing the complexity of displays that can be shown on them, such as intensive 3D displays.

Technical advantages provided by embodiments include more computing power being available for displays, which can allow for more complicated displays, such as 3D or particle-based displays. Embodiments can also result in a reduction in MFC display power/processing requirements. Embodiments of the display system can be run on a low processing power device. Embodiments can also offer faster deployment of new capability as they can be integrated into other systems, thereby providing the same benefits as those systems with regards to rapid deployment of new capability. A new application only needs to be added to the central processing unit, rather than to each display individually.

The highly available design can allow for uninterrupted viewing. By utilising containers within suitable centralised architecture, it is possible to scale the number of displays to meet the demand of operators. Embodiments can also add redundancy to a system. By removing the need for specific software or hardware from individual MFCs, embodiments can allow for any device with a browser and control input to operate as a system display.

According to an aspect of the present invention there is provided a submarine multi-function console display system comprising:
a plurality of client computing devices, each said client computing device comprising a processor, a user interface and a display device;
a server computing device configured to operate a containerised architecture and in communication with the plurality of client computing devices;
wherein the server computing device is configured to:
   receive a display request from one of the plurality of client computing devices;
   start a container to execute an application for generating the requested display, and
   stream data comprising a display generated by the application of the container to the client computing device for displaying on the display device of the client computing device.

The server computing device may be configured to control a plurality of containers, each of the plurality of containers configurable to execute an application for generating a display (e.g. from amongst a plurality of predetermined types of displays). The server computing device may be configured to create and/or start one of the plurality of containers upon receiving the display request.

The server computing device may be configured to deploy the one of the plurality of containers directly, e.g. using a containerisation controller such as Docker^{™}, without an orchestration platform (e.g. microk8s). A streaming engine and a signalling server may be duplicated in each of the plurality of containers. The signalling server can be configured to receive input from the client computing device and to transfer the input to the container. The web server can be configured to provide a front-end for the user to access the container.

The server computing device can be configured to send a request to a containerisation controller, such as Docker Engine^{™}, to create a new instance of the application in the container.

The display request may specify a particular display from amongst a plurality of predetermined types of display. The plurality of predetermined types of display may comprise, for example: vessel system status and/or diagnostic display; charting/mapping display; close-proximity manoeuvring visualisation, and/or vessel control system display. The server computing device can be configured to check whether the specified particular display comprises a type of display that should not be duplicated.

The server computing device may be configured to determine an available port in a communications network between the server computing device and the client computing device and can redirect the client computing device to the determined port to receive the streamed data from the new instance.

The server computing device can be configured to track currently active displays/applications and may enumerate variables required for instantiating the container. For example, the server computing device may be configured to write a new entry in a database for the new instance of the container.

The server computing device may include a plurality of GPUs configured to provide graphics acceleration to the generating of the requested display. The plurality of GPUs may be further configured to encode the data comprising the display generated by the application of the container for the streaming to the client computing device.

The user interface may be configured to interact with the application. Each said client computing device may execute a web browser application. The web browser application may be used to provide the request to the server computing device based on client input and to display the received data and/or to interact with (e.g. provide input to) the application. The client computing device may be configured to access a homepage provided by the server computing device via the web browser to receive the display request. In some embodiments, the streamed data may be displayed as a sub-frame of another web page on the client computing device via a URL embedded in a web frame.

The plurality of client computing devices may be housed in one or more consoles. The display device of the client computing device may comprise a 3D or particle-based display.

According to another aspect of the present invention there is provided a computer-implemented method of operating (by a server computing device) a submarine multi-function console display system by a server computing device in communication with a plurality of client computing devices, the method comprising:
providing a plurality of containers, each of the plurality of containers configurable to execute an application for generating a display from amongst a plurality of types of displays;
receiving a display request from one of the plurality of client computing devices for one of the plurality of types of display;
starting one of the plurality of containers to execute the application for generating the requested type of display, and
streaming data comprising a display generated by the application of the deployed container to the client computing device from which the display request was received for displaying on a display device of the client computing device.

According to another aspect of the present invention there is provided a computer-implemented method of operating (by a client computing device) a submarine multi-function console display system, the method comprising:
providing, by a client computing device, a display request for one of a plurality of types of display to a server computing device configured substantially as described herein, and
receiving, at the client computing device, streamed data comprising a display generated by an application of a deployed container provided by the server computing device, and
displaying the steamed data on a display device of the client computing device.

According to further aspects of the invention there are provided a system, a server computing device and a client computing device substantially as described herein.

According to a further aspect of the present invention there is provided a computer readable medium, or circuit, storing a computer program to operate any method substantially as described herein.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings:
Figure 1 is a block diagram of a conventional MFC in communication with a system;
Figure 2 is a block diagram of an MFC in accordance with an embodiment in communication with a shared computing environment;
Figure 3 is a diagram showing components of the MFC and shared computing environment of Figure 2;
Figure 4 is a flowchart illustrating example steps performed by an embodiment, and
Figure 5 is an API diagram illustrating processes that can be used by an embodiment.

### DETAILED DESCRIPTION

Figure 2 is a block diagram of an MFC 202 in accordance with an embodiment in communication with a shared computing environment 204. The MFC 202 includes a client computing device configurable to execute embodiments of the invention. The client device will normally comprise a computer that comprises, or be associated with, at least one processor, memory, a display device, a user interface and a communications interface. The at least one processor may comprise one or more of: a microprocessor, a microcontroller and an integrated circuit. The memory may comprise volatile memory, such as random access memory (RAM), for use as temporary memory, and/or nonvolatile memory such as Flash, read only memory (ROM), or electrically erasable programmable ROM (EEPROM), for storing data, programs, or instructions, for example. The display device may comprise a screen based on any suitable technology, such as LED, OLED, LCD, particle display, etc.

The user interface can comprise, for example, a mouse and keyboard that allows a user of the client computing device 202 to provide input, such as typing, dragging, etc, that can be communicated to the shared computing environment 204, thereby allowing the user to interact with an application being executed on the shared computing environment. The communications interface can provide data communication between the device and the environment 204, e.g. via a wireless or wired internet connection, a cellular network connection, or the like. Other components and features of the device, such as a power source/supply, audio output, etc, will be well-known to the skilled person and need not be described herein in detail. One or more of the client computing devices may be housed in one or more consoles (not shown). Having the client computing devices and associated components, including the display devices, smaller than the conventional hardware means that they can be agnostic of any specific hardware/console design. Thus, embodiments can be based on any suitable general purpose hardware or a dedicated purpose-built MFC, with the client computing devices and the shared computing environment hardware all being fitted onboard the vessel/submarine in a space-efficient manner.

In some embodiments the computing device of the MFC 202 may comprise a constrained-resource device, but which has at least the minimum hardware capabilities required to execute a web browser application 206. In some embodiments the computing device may comprise a low processing power device, such as a Raspberry Pi^{™}, but it will be understood that alternative computing devices and data transfer/display applications can be used.

The shared computing environment 204 will typically be implemented using at least one server class computer. The server will normally comprise, or be associated with, at least one processor, memory, a display device and a communications interface. The processor(s) of the server can be configured to execute applications and control hardware components associated with the environment. The environment 204 will be based on a containerised architecture. A containerized architecture allows software to be executed in an isolated unit, called a container, which can run consistently in any environment. Containers are similar to virtual machines, but are more lightweight because they share an operating system kernel with other containers and applications, while a VM runs its own full virtual operating system. Containers require less server resources and are faster to start up than VMs. Containers are isolated from one another and have their own software, libraries and configuration files and share the services of a single operating system kernel and can also communicate with each other through well-defined channels. Typical embodiments employ Docker^{™}, which uses OS-level virtualisation to automate the deployment of lightweight containers. Docker Engine^{™} is an open source containerization technology for building and containerizing applications and hosting the containers.

The environment can include a display system management application 210 that may create and control a plurality of containers 212A, 212B. Each container can be started/used to execute an instance of a display application that can generate a display from amongst several predefined types of displays. The server can also comprise processing sleds 214 and a GPU processing server 216. The GPUs can be configured to provide graphics acceleration to the displays being generated in the same way as GPUs do for regular PCs. The GPUs can encode the video stream so it can be sent over the network from the shared computing environment 204 to the client devices. This is faster than regular software encoding and provides a speed increase to the system.

Embodiments can run the containers directly, e.g. using Docker^{™}, without an orchestration platform (e.g. microk8s, etc), as it is unlikely there will be enough containers and demand to require a more complex management solution in typical use cases. Every display application can be built into a fully independent container 212, which may increase the overall disk size of each application because aspects of the system, such as the streaming engine and signalling server, are duplicated. This may also, however, greatly reduce the complexity of the system as there is no need for a central signalling or streaming server which requires significant engineering effort to develop.

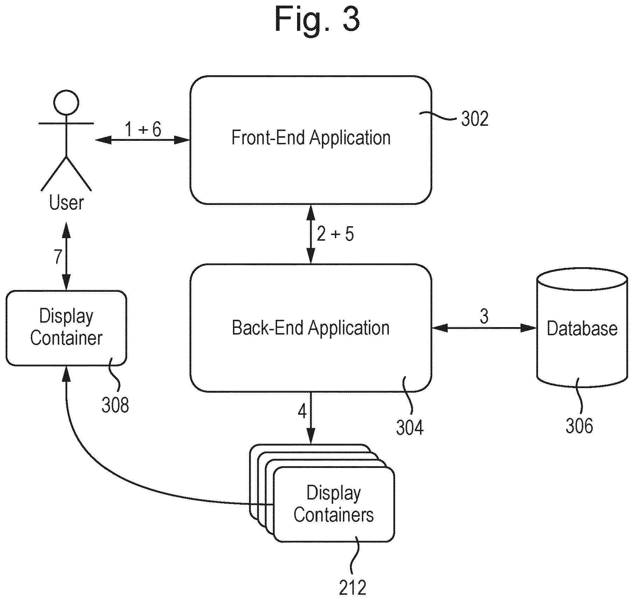

Figure 3 shows how a user 300 of an MFC 202 and interact with elements of the shared computing environment 204 according to an embodiment. It will be appreciated that the illustration is exemplary only and variations are possible, e.g. the display system management application executed by the server providing the shared computing environment does not need to be configured into front and back-end applications in the same way as shown. A front-end application 302 is executed by the server as part of the display system management application. The front-end communicates with the web browser executing on the client computing device of the MFC and can receive a user request for a particular display type from the user and passes that on to a back-end application 304 of the management application. Further tasks that may be performed by the front-end can include one or more of the following: allow users to create new types of displays; show Administrators what displays are currently being run; allow Administrators to close displays; show resource utilisation of computer cluster of the shared computing environment.

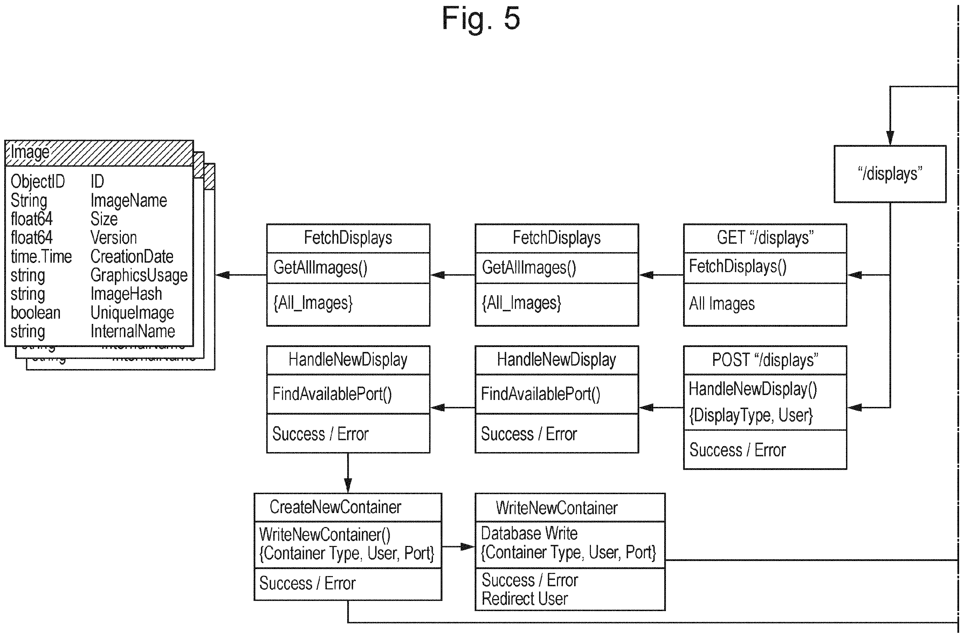

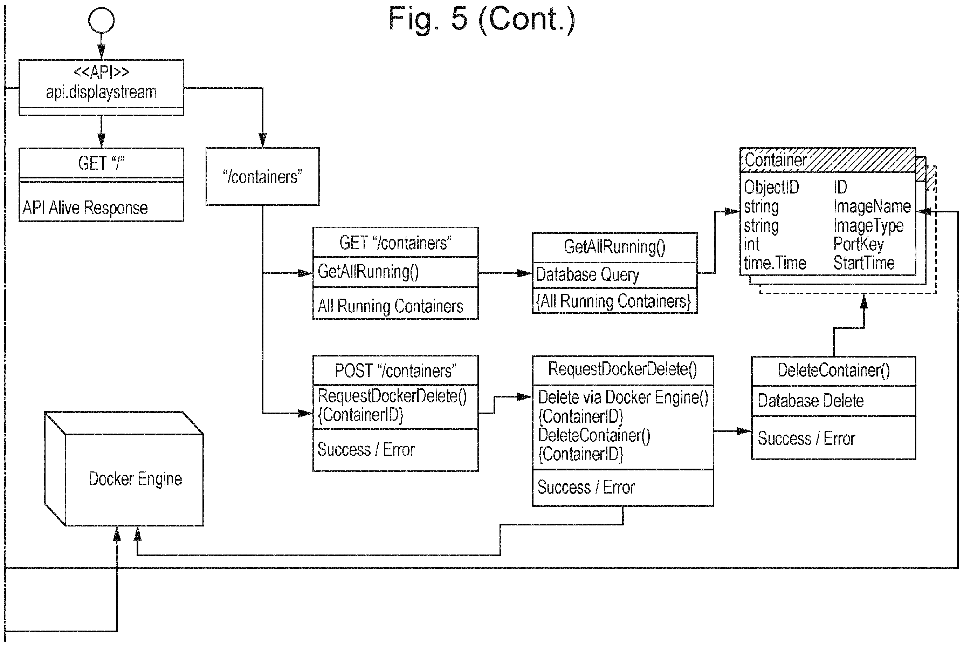

The back-end application 304 sends the request to the Docker Engine^{™} to create a new display instance 308 based on one of the plurality of containers 212 and can then redirect the user 300 to the correct endpoint to view the selected display. It can also communicate with a database 306 to track which displays are currently active so that it can enumerate variables that are required for instantiating the containers. The database 306 can comprise, for example, a MongoDB instance. The schematic diagram of Figure 5 shows database fields used by an example embodiment.

The user 300 can typically interact with embodiments of the display system in one of two ways:
1. Home Page Access: This is the primary way in which the system is intended to be used. The user goes to a URL and is shown a single-page application with all available display applications/types listed. By selecting one of these options they are redirected to a streamed display of this container.
2. Embedded Access: This is an alternative method designed to support the other display systems. By embedding a URL in a web frame, it is possible to include a streamed display as a sub-frame of another web page.

Both of the above methods are enabled by the back-end application 304 that has been created specifically for embodiments.

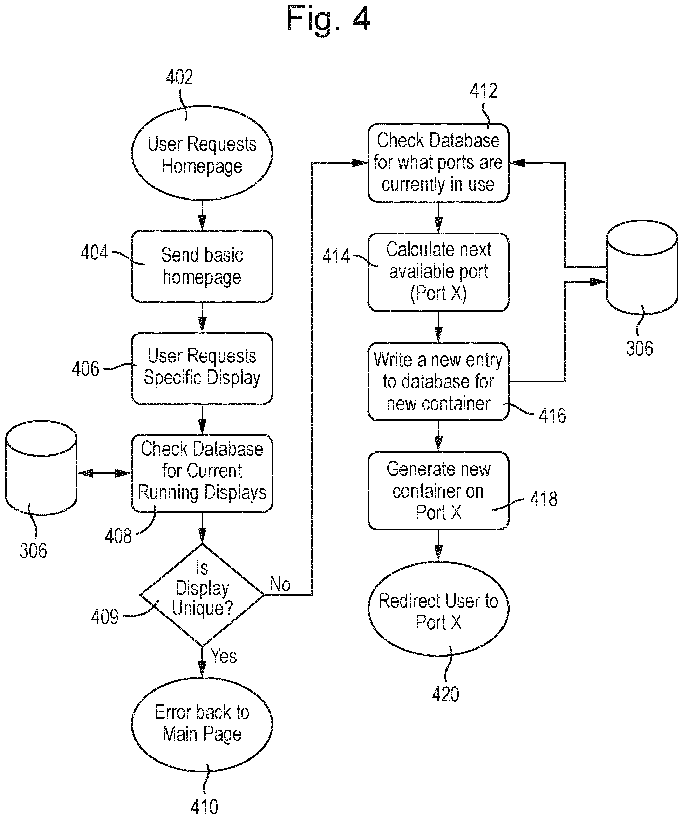

Figure 4 is a flowchart illustrating steps performed by an example method. The steps can be performed by software instructions executing on one or more processor, typically in the form of the display system management application being executed by the server. It will be appreciated that at least one of the steps of any of the flowcharts herein may be re-ordered or omitted. One or more additional steps may be performed in some cases. Further, although the steps are shown as being performed in sequence in the Figures, in alternative cases some of them may be performed concurrently, possibly on different processors or cores. It will also be understood that versions can be implemented using any suitable software application, programming language, data editors, etc, and may be represented/stored/processed using any suitable data structures and formats.

At step 402, the user 300 of the MFC 202 requests the homepage and at step 404 the front-end application 302 of the display system management application provides the homepage's single-page application with all the available display applications to the MFC. Examples of display types that can be provided by the applications include: status of system infrastructure; charting software; command and control hub; 3D diagnostic tools; close-proximity manoeuvring visualisation; ownship control.

At step 406 the user 300 provides their selection of one of the display applications. At step 408 the back-end application 304 checks the database 306 for currently running displays. At step 409 the back-end application 304 performs a check as to whether the selected display is unique. The database can include data indicating whether or not this should be the case for each type of display. This is useful because there are certain types of displays for which there should not be two or more instances/duplications, e.g. ownship control (for directing the movement of the ship/platform). Traditionally this is not a problem because there is only one conventional console provided for it, but in embodiments it should be necessary to make sure none of these unique types of displays can be shown to two different users/displays at the same time.

If the check of step 409 indicates that the selected display is unique then control passes to step 410, where an error message is provided and the MFC is directed back to the homepage. If the check of step 409 indicates that the selected display is not unique then control passes to step 412, where the back-end application 304 checks the database 306 to ascertain which ports are currently in use.

At step 414, the next available port is determined by the back-end application 304. In some embodiments this is done by the back-end application keeping track of all currently used ports by querying the database 306. It can then perform a simple search to find the number/ID of the lowest unused port and return that. At step 416 a new entry is written in the database 306 for the new instance of the container that will provide the selected display to the user.

At step 418 the new instance of the container is created and started on the determined port, and at step 420 the back-end application 304 redirects the MFC 202 to the determined port. The MFC can then receive and display streamed data comprising the display generated by the container via the determined port. In an example embodiment the display can be generated after the container is started with an Ubuntu^{™} base image. This can then also run an 'X Server' that acts as a virtual display that receives the output from the OS. The output can be encoded by the GPU and sent via WebRTC to the client device. At the same time, a signalling server can be started in the same container. This may comprise, for example, a Python^{™} application that can receive input from the user and transfer it into the running Ubuntu^{™} container. This allows the user to control the container as though it was a regular virtual machine. A web server can be started to provide a front-end for the user to access the running container.

Figure 5 is an API diagram illustrating specific examples of the architecture and operational logic that can be used by an embodiment. In the Figure a "container" is a template of a display streaming container that has not yet been started. When a container is created it becomes a "display" in the Figure, i.e. a display is an instance of a container. The diagram shows how functions can be used to create an instance/display and update the database 306 accordingly. In specific embodiments some of the functions can be provided by 'gin' (a GoLang web framework); however, the skilled person will appreciate that this is only one example and alternative frameworks, as well as other functions, may be used.

Terms such as 'component', `module', 'processor' or 'unit' used herein may include, but are not limited to, a hardware device, such as circuitry in the form of discrete or integrated components, general processing units (GPUs), a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. A submarine multi-function console display system comprising:
a plurality of client computing devices (202), each said client computing device comprising a processor, a user interface and a display device;
a server computing device (204) configured to operate a containerised architecture and in communication with the plurality of client computing devices;
wherein the server computing device is configured to:
receive a display request from one of the plurality of client computing devices;
start a container (212) to execute an application for generating the requested display, and
stream data comprising a display generated by the application of the container to the client computing device for displaying on the display device of the client computing device.

2. A system according to claim 1, wherein the server computing device (204) is configured to deploy a plurality of containers (212), each of the plurality of containers configurable to execute an application for generating a display.

3. A system according to claim 2, wherein the server computing device (204) is configured to deploy the one of the plurality of containers directly without an orchestration platform.

4. A system according to claim 2 or 3, wherein each of the plurality of containers comprises a signalling server and a web server, wherein the signalling server is configured to receive input from the client computing device (202) and transfer the input to the container (212), and the web server is configured to provide a front-end for a user of the client computing device to access the container.

5. A system according to any preceding claim, wherein the display request specifies a particular display from amongst a plurality of predetermined types of display.

6. A system according to claim 5, wherein the server computing device (204) is further configured to check whether the specified particular display comprises a type of display that should not be duplicated.

7. A system according to any preceding claim, wherein the server computing device (204) is configured to determine an available port in a communications network between the server computing device and the client computing device (202) and to redirect the client computing device to the determined port to receive the streamed data.

8. A system according to any preceding claim, wherein the server computing device (202) includes a plurality of GPUs configured to provide graphics acceleration to the generating of the requested display, and wherein the plurality of GPUs are further configured to encode the streamed data comprising the display generated by the application of the container.

9. A system according to any preceding claim, wherein each said client computing device (202) is configured to execute a web browser application (206), wherein the web browser application is configured to provide the display request to the server computing device (204) based on user input and to display the streamed data.

10. A system according to any preceding claim, wherein the plurality of client computing devices (202) are housed in one or more consoles of the submarine multi-function console display system.

11. A system according to any preceding claim, wherein the display device of the client computing device (202) comprises a 3D display or a particle-based display.

12. A computer-implemented method of operating a server computing device in a submarine multi-function console display system, the server computing device in communication with a plurality of client computing devices, the method comprising:
providing a plurality of containers, each of the plurality of containers configurable to execute an application for generating a display from amongst a plurality of types of displays;
receiving (406) a display request from one of the plurality of client computing devices for one of the plurality of types of display;
starting (418) one of the plurality of containers to execute the application for generating the requested type of display, and
streaming (420) data comprising a display generated by the application of the deployed container to the client computing device from which the display request was received for displaying on a display device of the client computing device.

13. A server computing device (202) configured to execute a method according to claim 12.

14. A computer-implemented method of operating a client computing device in a submarine multi-function console display system, the method comprising:
providing (406), by the client computing device, a display request for one of a plurality of types of display to a server computing device according to claim 13;
receiving (420), at the client computing device, streamed data comprising a display generated by an application of a deployed container provided by the server computing device, and
displaying the steamed data on a display device of the client computing device.

15. A computer readable medium, or circuit, storing a computer program to operate a method according to claim 12 or 14.
